# EUROPEAN PATENT APPLICATION

(11) **EP 3 255 322 A1**
(43) Date of publication of application: **13.12.2017**
(21) Application number: 16746648.1
(22) Date of filing: 03.02.2016
(51) Int. Cl.: F16J 15/20, C08J 5/04, C08J 5/16, F16J 1/01, F16J 15/16

(54) **SEALING DEVICE**

(30) Priority: 05.02.2015 JP 2015021090
(71) Applicant: KYB Corporation, Tokyo 105-6111 (JP)
(72) Inventor: KATO, Shinji, Tokyo 105-6111 (JP); KOBAYASHI, Takashi, Tokyo 105-6111 (JP); SUGIURA, Yoshinori, Tokyo 105-6111 (JP); SAKURAGI, Kenji, Tokyo 105-6111 (JP)
(74) Representative: TBK
(86) International application number: PCT/JP2016/053157
(87) International publication number: WO 2016/125817

(57) **Abstract**

Abstract: Problem: Provided is a sealing device which has reduced wear of a metallic member in sliding portions having electric-resistance welded carbon steel and a fiber reinforced resin member. Means for resolution: A sealing device having a mechanism in which a metallic member and a resin member relatively slide, wherein the metallic member is formed from electric-resistance welded carbon steel, and the resin member is formed from a carbon-fiber reinforced synthetic resin.

## Description

### Technical Field

The present invention relates to a sealing device for sealing a gap between a pair of surfaces facing and sliding each other, in which a working fluid takes part.

### Background Art

Generally, hydraulic devices work by operating a hydraulic pump using an external driving source (an electric motor or an engine), and causing a hydraulic fluid (hydraulic oil) having a pressure obtained by the hydraulic pump to operate a hydraulic cylinder. For example, the hydraulic devices are employed as a driving source for construction machines, such as a hydraulic shovel, and industrial vehicles, such as a forklift truck. Further, the hydraulic devices are also used in a quake absorbing apparatus for building, a shock absorber for an automobile or bike, and the like. In these hydraulic devices, generally, it is necessary that a hydraulic oil contained in the hydraulic cylinder be in a sealed condition , and maintaining an appropriate operation of the device by preventing a leak of the hydraulic oil, wear of the cylinder, and the like has conventionally been an important task.

For smoothly operating the hydraulic device, many measures are made, for example, to prevent the occurrence of an oil leak by using a sealing device having a piston ring and a backup ring provided in the sliding portion of a hydraulic cylinder and a piston, or the like. For example, as an example of the improvement of the durability of the sealing mechanism by using a specific material in the sealing mechanism, there have been proposed a mechanism in which an O-ring made of an elastomer, a backup ring harder than a fluororesin, and a piston ring made of a fluororesin are fitted to a piston ring groove in this order from the bottom side so that the outer surface of the piston ring is closely in contact with the inner surface of the cylinder (PTL 1), and a seal member which has a seal ring used for sealing a fluid, and a backup ring provided on the inner diameter sidewall of the seal ring, wherein the seal ring is formed from a tetrafluoroethylene resin and the backup ring is formed from a fluororesin other than the tetrafluoroethylene resin so that the seal ring and the backup ring are not adhered together (PTL 2).

Further, as an example of the system in which a seal ring and a backup ring slide while both of them are in contact with the inner surface of the cylinder, there have been proposed a sealing device which enables any one of the suppression of slipping off of the seal member due to the backup ring, the improvement of the assembling properties, and the improvement of the processability of the backup ring, wherein the backup ring for supporting the seal member formed from an elastomeric material is formed from an elastomeric material having an Hs hardness of 90 to 100 (PTL 3), and a fluid pressure cylinder which facilitates fitting of the seal ring without complicating the structure of the body of piston, wherein the piston has a seal ring disposed in the seal ring containing groove of the piston body, a piston ring having a joint disposed in the piston ring containing groove of the piston body, and a backup ring which is fitted to the outer surface of the piston body and disposed between the seal ring and the piston ring, wherein the fluid pressure cylinder has a structure in which the load that the backup ring receives from the seal ring is supported by the piston ring (PTL 4).

Further, there has been proposed a sealing device for sealing reciprocating parts, such as a piston, wherein the sealing device prevents a damage due to slipping off of the seal ring when being under a high pressure, and further suppresses the sliding resistance of the seal ring, wherein the sealing device has, in a fitting groove continuously in the circumferential direction formed in one of the inner surface of the outer member and the outer surface of the inner member movably disposed in the axial direction on the inner surface of the outer member, a seal ring formed from an elastomeric material, and a backup ring being formed from a material harder than the seal ring and having a height h larger than a depth d of the fitting groove, wherein the required number of notches for permitting the both sides of the backup ring to be in communication with each other are formed in the inner surface or outer surface of the backup ring. The backup ring prevents the seal ring from slipping off from the fitting groove, and the notches allow the fluid to flow between the both sides of the backup ring in the axial direction, and therefore the lubricating properties of the seal ring by the fluid in the proposed sealing device are ensured (PTL 5).

### Citation List

### Patent Literature

PTL 1: JP-A-11-62829
PTL 2: JP-A-2006-342972
PTL 3: JP-A-2001-146969
PTL 4: JP-A-2011-163523
PTL 5: JP-A-2010-133511

### Summary of Invention

### Technical Problem

A hydraulic device, which operates a hydraulic pump using an external driving source and causes a hydraulic fluid (hydraulic oil) having a pressure obtained by the hydraulic pump to operate a hydraulic cylinder, is provided with a sealing mechanism that seals the cylinder to prevent the pressurized hydraulic oil from leaking from the cylinder. The mechanism is generally provided with, for example, a seal member and a backup ring which can surely prevent slipping off of the seal member to maintain excellent sealing performance, and, for example, the seal member and backup ring are provided in a piston and slide while being in closely contact with the inner surface of the cylinder to prevent the pressurized hydraulic fluid from leaking.

Conventionally, a cylinder is produced by welding, forge welding, or the like, and a seal member or a backup ring is produced from a synthetic resin reinforced with a glass fiber, and the hydraulic device using them is free of problems and has been widely used.

However, it has been found that, when a cylinder formed from electric-resistance welded carbon steel and a backup ring formed from a glass-fiber reinforced synthetic resin are used in combination and they slide for a long term, problems arise in that the hydraulic oil suffers blackening and that the abrasion wear of the inner surface of the cylinder is increased to be larger than the wear that is conventionally caused. Accordingly, an object of the present invention is to solve the problems about blackening of the hydraulic oil and wear of the cylinder caused due to sliding of the cylinder formed from electric-resistance welded carbon steel and the backup ring provided in a piston.

### Solution to Problem

The present inventors have conducted extensive and intensive studies with a view toward solving the problems in that the hydraulic oil suffers blackening and that the abrasion wear of the inner surface of the cylinder is increased to be larger than the wear that is conventionally caused. As a result, the present invention has been completed. Specifically, in the present invention, by using a member comprising electric-resistance welded carbon steel and a member comprising a carbon-fiber reinforced synthetic resin in combination, it is possible to solve the problems caused due to a conventional combination of the member comprising electric-resistance welded carbon steel and a member comprising a glass-fiber reinforced synthetic resin.

In the present invention, blackening of the hydraulic oil and a phenomenon of increase of the abrasion wear of electric-resistance welded carbon steel caused due to sliding of the member comprising electric-resistance welded carbon steel and the member comprising a glass-fiber reinforced synthetic resin are solved by a simple method.

The gist of the present invention is a sealing device having a mechanism in which a metallic member and a resin member relatively slide, characterized in that the metallic member comprises electric-resistance welded carbon steel, and the resin member comprises a carbon-fiber reinforced synthetic resin.

### Brief Description of Drawings

[Fig. 1] Photographs showing metallographic structures of EG pipe and forged pipe materials.
[Fig. 2] A graph showing the hardness of the EG pipe and forged pipe materials in the cross-section.
[Fig. 3] Photographs showing the surface states of the EG pipe and forged pipe materials.
[Fig. 4] Diagrams showing the surface state of a backup ring.
[Fig. 5] A graph showing a change of the abrasion wear of a metal when changing the type and composition of hydraulic oil.
[Fig. 6] A photograph showing the appearance of a block-on-ring test machine.
[Fig. 7] Photographs showing the test results obtained in a block-on-ring test.
[Fig. 8] Photographs showing the appearance of the backup ring used in the test.
[Fig. 9] Photographs of cross-sections of a glass-fiber reinforced resin and a carbon-fiber reinforced resin, showing the state of dispersion of the fiber.
[Fig. 10] 3-D Photographs showing the state of wear of the EG pipe caused by the glass-fiber reinforced resin and the carbon-fiber reinforced resin.

### Description of Embodiments

The invention is directed to a sealing device having a mechanism in which a metallic member and a resin member relatively slide, characterized in that the metallic member comprises electric-resistance welded carbon steel, and the resin member comprises a carbon-fiber reinforced resin, and, by the invention, prevention of blackening of hydraulic oil and reduction of the abrasion wear of the metallic member at the sliding surface caused due to sliding of the both members for a long time have been achieved.

The invention solves the problems caused due to sliding of a conventional member made of a glass-fiber reinforced synthetic resin and a member formed from electric-resistance welded carbon steel.

### [Metallic member]

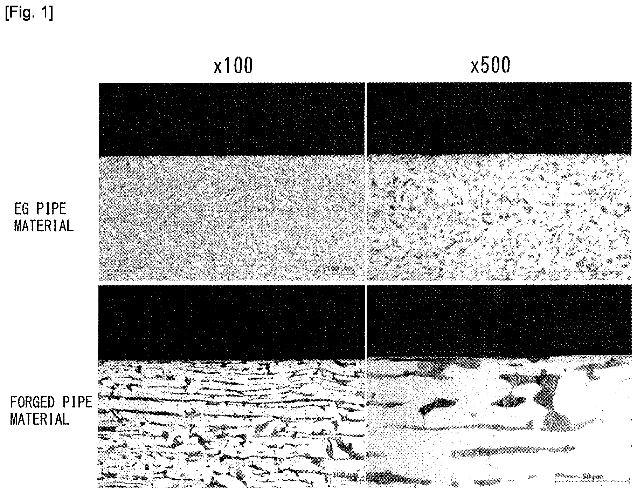

With respect to the metallic member in the invention, a steel material which has a relatively high strength though it has a low carbon content, and has excellent weldability and which has almost no pearlite structure is used. Specifically, preferred is a steel material which is electric-resistance welded carbon steel and which has not been subjected to hot finishing or cold finishing. With respect to the composition and properties of the steel material, the component standard values are shown in Table 1, the surface hardness is shown in Table 2, the cross-section hardness is shown in Table 3, and the structure and micro-hardness are shown in Fig. 1, while making a comparison with those of a forged pipe material. The "forged pipe material" is a steel material which has a pearlite structure and which does not take the weldability into consideration, and is a material that exhibits a wear resistance due to the effect of the hard precipitate phase in the structure.

**[Table 1]**

| Component standard values (%) | | | | | |
|---|---|---|---|---|---|
| | C | Si | Mn | P | s |
| EG pipe | 0.06 - 0.12 | ≤ 0.40 | 0.10 - 15 | ≤ 0.03 | ≤ 0.02 |
| Forged pipe | 0.12 - 0.18 | ≤ 0.35 | 0.30 - 0.90 | ≤ 0.04 | ≤ 0.04 |

**[Table 2]**

| Results of surface hardness test (HRC scale) | | | | | |
|---|---|---|---|---|---|
| | 1 | 2 | 3 | Av. | HV (converted value) |
| EG pipe | 13.8 | 15.8 | 16.3 | 15.3 | 215 |
| Forged pipe | 16.9 | 16.8 | 14.6 | 16.1 | 219 |

**[Table 3]**

| Results of cross-section hardness test (HV) | | | | | | | | |
|---|---|---|---|---|---|---|---|---|
| | | 1 | 2 | 3 | 4 | 5 | 6 | Av. |
| EG pipe | | 211.7 | 199.4 | 182.3 | 168.3 | 177.8 | 160.4 | 183.3 |
| Forged pipe | Ferrite portion | 159.5 | 155.8 | 164.3 | 146.3 | 167.2 | 156.7 | 158.3 |
| | Pearlite portion | 213.1 | 217.5 | 234.9 | 234.5 | 198.1 | 260.2 | 226.4 |

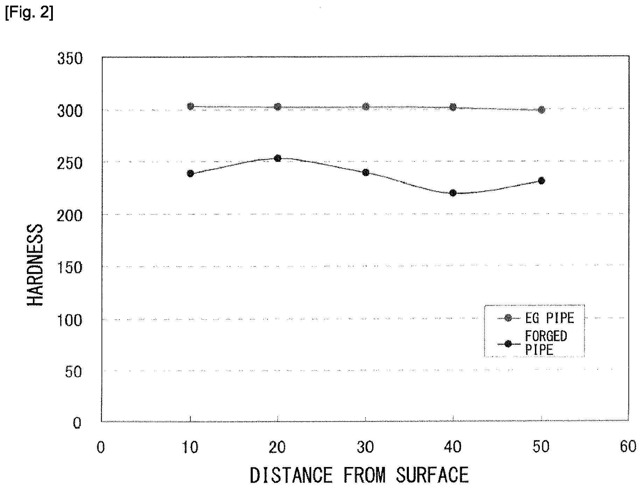

The metallic member comprising electric-resistance welded carbon steel is of a metallographic structure having fine ferrite distributed as shown in Fig. 1, and having substantially no pearlite. In contrast, the forged pipe material has distributed large crystals of pearlite. From the results of the below-described tests using an actual machine, it is found that the above-mentioned difference in the crystal structure is considered to be related to blackening of the hydraulic oil and metal wear of the sliding surface. With respect to the cross-section hardness of the sliding surface of a metal, as can be seen from Table 3, the electric-resistance welded carbon steel has an almost constant cross-section hardness, but the forged pipe material has caused unevenness in the hardness such that the ferrite portion exhibits a low hardness and the pearlite portion exhibits a high hardness. Further, with respect to the relationship between the distance from the surface (depth) and the hardness, as shown in Fig. 2, a large difference is caused between the electric-resistance welded carbon steel and the forged pipe material. The electric-resistance welded carbon steel used in the invention preferably exhibits a constant value from the surface to a depth of 50 µm. Sliding the electric-resistance welded carbon steel inevitably causes the sliding surface to more or less wear, but the newly appearing surface resulting from wearing maintains the same hardness as that before wearing, making it possible to prevent discontinuous wear or excessive wear.

Electric-resistance welding carbon steel is generally used as a material for producing mainly a steel pipe by electric resistance welding. With respect to the steel pipe produced from electric-resistance welding carbon steel, generally, the degree of freedom of the size of the outer diameter is low, but the welded seam (seam portion) is welded by electric resistance welding so that the structure of the material is melted, and therefore the electric-resistance welded pipe has a high strength at the seam portion, as compared to the forge welded steel pipe. The electric-resistance welded steel pipe inevitably suffers generation of a weld bead (weld metal deposited on the surface or back surface by welding) at the seam portion by electric resistance welding, but the portions other than the seam portion are not heated and therefore the pipe has excellent surface appearance. According to the use of the pipe, the pipe is finished by removing the weld bead. Further, the pipe is subjected to cold finishing or hot finishing if necessary. With respect to the use of the electric-resistance welded steel pipe, the electric-resistance welded steel pipe is widely used in a line pipe for transferring petroleum, gas, or the like, a gas pipe, a steel pipe for automobile and other machine structures, a steel pipe for boiler, a cylinder tube, and the like. The pipe formed from electric-resistance welded carbon steel has excellent weldability, and is of a steel type that has a relatively high strength though it has a low carbon content, and therefore the use of the pipe as a cylinder tube is spreading.

### [Resin member]

The resin member in the invention comprises a carbon-fiber reinforced synthetic resin, and it is preferred that the carbon fiber is uniformly distributed in the synthetic resin so as not to cause the sliding surface with the metallic member to have an uneven surface or have unevenness in the hardness. The synthetic resin used is preferably one which is generally called an engineering plastic, and examples of such synthetic resins include polyamide, polycarbonate, polyacetal, modified polyphenylene ether, polybutylene terephthalate, polyphenylene terephthalate, polyphenylene sulfide, polyarylate, polyamide-imide, polyether imide, polyether ether ketone, polysulfone, polyether sulfone, an epoxy resin, and a fluororesin.

With respect to the carbon fiber used in the invention, there is no particular limitation, and any carbon fiber can be used as long as it is used as a reinforcing material or filler for a resin material, and the carbon fiber is contained in the resin generally in an amount of 5 to 15%.

### [Studies on wear of the metallic member using an actual machine]

The present inventors have found, when inspecting a cylinder for operating machines, that the inner surface of a cylinder tube has a portion which has worn more markedly than the cylinder tube conventionally used and blackening of the hydraulic oil has progressed, and they have conducted extensive and intensive studies in an attempt to elucidate the above phenomena and solve the problems of them to produce an operating machine which enables a stable operation.

With respect to the material for the cylinder, there were two types of pipes, i.e., an electric welded pipe formed from electric-resistance welded carbon steel (hereinafter, frequently referred to as "EG pipe" or "electric-resistance welded steel pipe") and a forged pipe (forged steel pipe). A piston was provided in the cylinder, and a seal ring (carbon-fiber reinforced fluororesin), a backup ring (glass-fiber reinforced polyamide 66 resin), a bearing, and a fluororesin layer were provided in the piston.

With respect to the inner surface of the cylinder tube, the surface state was examined by means of an FE-SEM (field emission scanning electron microscope) . The black portion was ion-polished and then, subjected to SEM (scanning electron microscope) examination, EBSD (electron beam backscattering diffractometry) analysis, and XRD (X-ray diffractometry) analysis, and the results described below were obtained.

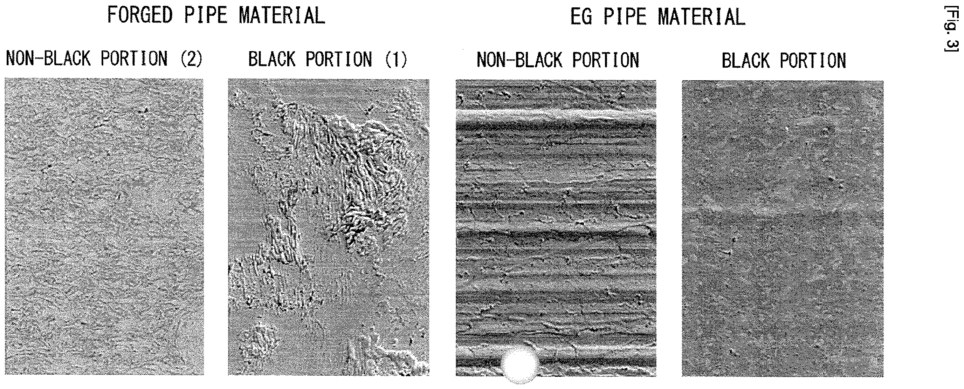

Fig. 3 shows the results of the SEM examination of the inner surface of the cylinder tube. The black portion of the EG pipe is relatively smooth. In contrast, the non-black portion is considerably uneven. On the other hand, the black portion of the forged pipe is found to have suffered corrosion to expose a pearlite structure. Further, almost no uneven surface is found in the non-black portion of the forged pipe. The black portion was a site having a small abrasion wear, and the non-black portion was a site having a large abrasion wear.

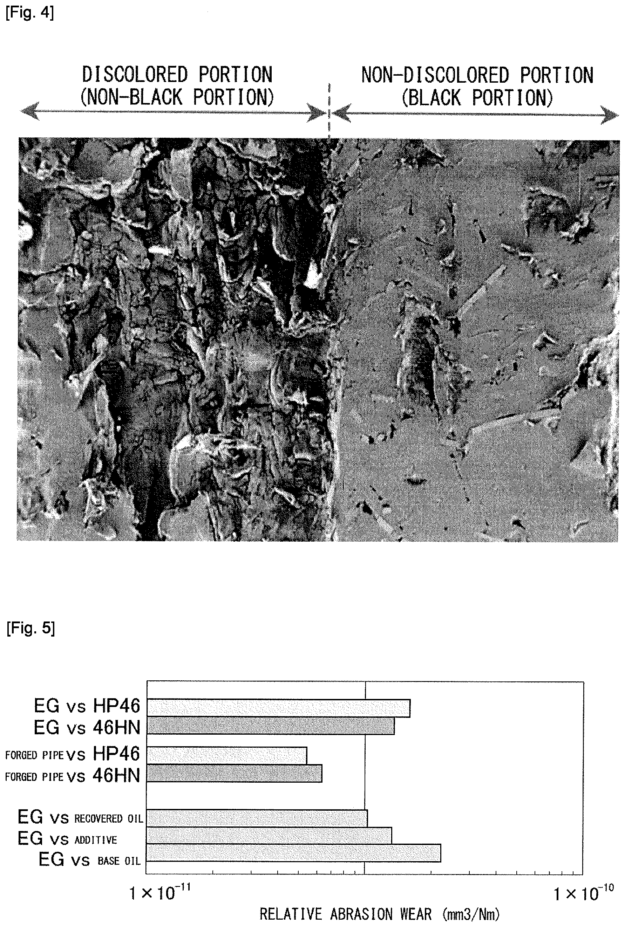

The XRD analysis of the black portions shows that a peak considered to be ascribed to Fe₃0₄ is detected, though very slightly, from the black portion of the EG pipe, and it is considered that the black portion of the cylinder tube has Fe₃0₄ formed in a slight amount. The observation of the appearance of the backup ring shows that there is a sliding surface having deposited thereon a black substance which looks like a wear powder, and that a partially cracking is seen in the end of the backup ring. The results of close observation of the black portion and the other portions of the backup ring are shown in Fig. 4. It is found that the discolored portion of a black color has considerably worn. However, there was not seen a substance which looks like a wear powder. From the fact that the backup ring has a partially cracking, it is considered that a large pressure was exerted on the backup ring. Further, from the fact that no damage was recognized in the seal ring, the data obtained from an actual operating machine shows that wear of the cylinder is presumed to be a phenomenon caused due to the backup ring.

[Influence of type of the hydraulic oil on abrasion wear of the metallic member]

From the above-mentioned test using an actual machine, it is presumed that wear of the inner surface of the cylinder is caused by the polyamide resin having a glass fiber, but a test was conducted on the assumption that the composition or additive of the hydraulic oil influences the abrasion wear. This test was made in order to clarify the cause of wear of the inner surface of the cylinder.

As rings to be tested, like those in the actual machine, a glass-fiber reinforced polyamide 66 material ring and a standard ring made of steel were prepared, and combined with the EG pipe material and the forged pipe material to perform a block-on-ring test. The method and conditions for the block-on-ring test are as shown in the following Examples.

As oils for test, HP46 (JX) and 46HN (Idemitsu) were used. Further, tests were made on the combinations of the pipe material with the recovered HP46 oil, an oil obtained by adding chlorine in an amount of 0.1% to HP46, or SU8 (base oil) to study the influence of the components mixed into the hydraulic oil.

The results of the test are shown in Fig. 5. With respect to the polyamide material reinforced with a glass fiber, the forged pipe exhibits more excellent wearing properties than those of the EG pipe. Further, a significant difference in the wearing properties between the hydraulic oils could not be recognized. From the above, the main cause of the blackening phenomenon of the hydraulic oil and wear of the cylinder tube is considered to reside in the backup ring.

### [Difference in structure between the EG pipe material and the forged pipe material]

Fig. 1 shows microstructures of the EG pipe material and the forged pipe material. The EG pipe material has a carbon content as low as, for example, C: 0.08%, and hence appears to have a relatively low pearlite ratio. The structure of the EG pipe material is found to be a microstructure of about 20 µ or less. In contrast, the forged pipe material is cold processed in the state of a bare pipe, and therefore the structure of the uppermost surface is found to be stretched in the lengthwise direction.

The results of the measurement of hardness distribution from the surface are shown in Fig. 2. The EG pipe material is substantially of a ferrite structure, and therefore almost no change in the hardness is found even when the distance from the surface is changed. In contrast, the forged pipe material is of a (ferrite + pearlite) structure, and therefore a tendency is seen that when the measuring point of a hardness corresponds to pearlite which is hard, the hardness is increased.

Hereinabove, an explanation has been made on the cause of the problems due to sliding of the metallic member and the resin member by exemplifying the cylinder of the operating machine as a specific example of the invention. Problems similar to those of the invention are considered to be caused in the metallic member and the resin member used in other machines and parts, and the invention advantageously solves the problems of this type.

### [Steel pipe formed from electric-resistance welded carbon steel]

Next, the backup ring and the steel pipe formed from electric-resistance welded carbon steel are described below.

A specific example of the application of the invention is an operating machine and, for example, the invention is used for sealing a moving part or fixed part using a backup ring and an O-ring in an arm cylinder tube, a bucket cylinder tube, or the like of, e.g., a power shovel. In such a machine, when the fluid pressure is too high or the gap for the axis is too large, the O-ring slips off toward the low pressure side, and suffers gauging , so that the sealing properties become poor. The backup ring prevents such a slipping-off phenomenon, and is in the state of sliding with the inner surface of the cylinder. Further, the backup ring has an effect that, even when it is under a low pressure such that the O-ring is free of a slipping off problem, the backup ring prevents accidents, such as plucking and a damage in torsion, which are main causes of a damage of the O-ring, to remarkably elongate the life of the O-ring. After fitted, the backup ring is required to undergo plastic deformation to fill the gap as the pressure increases, and further is required not to slip off due to the operating pressure. According to the fluid pressure and the size of the gap, and, when used for sliding, according to roughness of the surface, and conditions for use, such as a sliding rate, a material, such as leather, a hard rubber, a fluororesin, polyamide, or a soft metal, is used depending on the respective uses. Recently, a fluororesin, polyamide, or the like is mainly used.

In the production of the steel pipe from electric-resistance welded carbon steel, a steel strip (coiled material) at room temperature is used as a material, and the steel strip is continuously drawn using a machine, such as an uncoiler or a leveler, and the edge faces of the steel strip on both sides are subjected to edge treatment for welding the ends put together. After the edge treatment, the steel strip in the width direction is deformed into a circular form to be formed into a pipe shape, and, immediately before welding, a large current locally flow the both ends of the steel strip so that the contacted portion of the ends is instantly in a high-temperature state, and the ends are put together as such and welded by electric resistance welding to be formed into a pipe. The hot formed pipe is cut into a predetermined length, and cooled to room temperature, and then finished using a sizing machine so as to have a predetermined size. Then, the resultant pipe is continuously subjected to a series of steps of pipe end treatments, such as beveling and thread cutting, coating, plating, marking, finished pipe inspection, and the like, and thus is finally finished as a product.

### Example 1

### [Blackening of a hydraulic oil and abrasion test for the metallic member by a block-on-ring test]

The results of the above-mentioned test using an actual machine strongly suggest that the backup ring affects blackening of the hydraulic oil and wear of the metallic member. Therefore, using a test machine similar to the actual machine, studies were made on the method for solving problems of blackening of the hydraulic oil and wear of the metallic member. A test called block-on-ring test was conducted as described below. This test was found to be able to reproduce the problem phenomenon caused in the actual machine, and therefore, using the method of this test, the analysis and solution of the problems were studied. As described below, the results have clearly shown that the problems caused due to the resin member formed from a glass-fiber reinforced epoxy resin are solved by the invention.

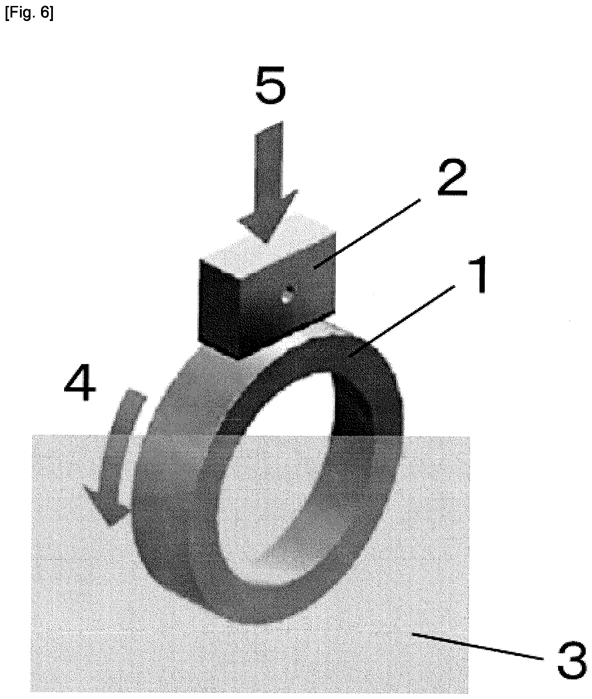

In the block-on-ring test, as shown in Fig. 6, a part of a resin member comprising a fiber reinforced resin ring 1 is immersed in a hydraulic oil 3, and a metallic member comprising a metallic block 2 is brought into contact with the surface of the fiber reinforced resin ring 1, and, while applying a load 5 to the metallic block 2, the fiber reinforced resin ring 1 is rotated in a direction 4 of rotation to cause both the members to slide. After the ring was continuously rotated for a predetermined period of time, discoloration of the hydraulic oil 3 and the state of the sliding surface of the metallic block 2 were observed.

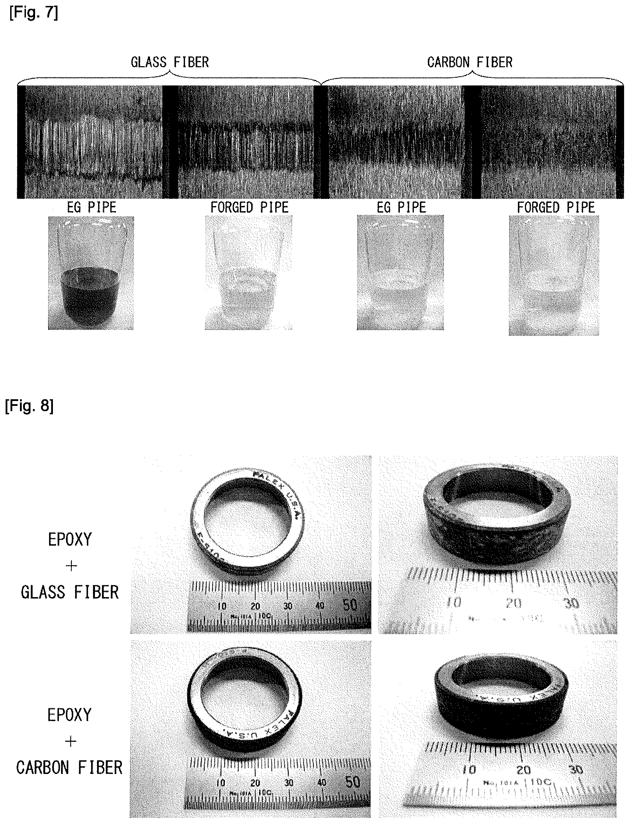

Rings formed from a glass-fiber reinforced epoxy resin and a carbon-fiber reinforced epoxy resin, respectively, and blocks respectively having the same metal compositions as those of the EG pipe (electric-resistance welded carbon steel) and the forged pipe (conventional pipe) were prepared and subjected to block-on-ring test. The test was conducted under conditions such that the oil temperature was 80°C, the number of revolutions of the ring was 163 rpm, and the load was 5 kg for 3.3 hours. The sliding distance was 2.47 km, and the sliding rate was 0.3 m/sec. The results of the test are shown in Fig. 7. Table 4 shows combinations of the materials tested.

**[Table 4]**

| | |
|---|---|
| Combination | (1) Glass fiber vs EG pipe |
| | (2) Glass fiber vs Forged pipe |
| | (3) Carbon fiber vs EG pipe |
| | (4) Carbon fiber vs Forged pipe |

In the combination of the ring made of a glass-fiber reinforced epoxy and the EG pipe, not only a large wear mark is recognized in the sliding surface of the metallic member, but also the hydraulic oil 3 has suffered blackening. On the other hand, in the combination of the ring made of a glass-fiber reinforced epoxy and the forged pipe, the wear mark in the sliding surface was small, and thus the wear was at such a level that there was no problem from a practical point of view. The hydraulic oil 3 had no change in color. In contrast, in the combination of the ring made of a carbon-fiber reinforced epoxy and the EG pipe, the wear mark in the sliding surface of the metallic block 2 was markedly reduced, and the result has shown that the wear is smaller than that in the combination of the glass fiber and the forged pipe. Further, also in the combination of the glass fiber and the forged pipe, the result has shown that the abrasion wear is reduced. Further, it has been found that, when using the carbon-fiber reinforced epoxy ring, a blackening phenomenon of the hydraulic oil does not occur, irrespective of the material for the metallic member.

As apparent from the results of the above test, the test has demonstrated that, by using the ring comprising a carbon-fiber reinforced synthetic resin in the invention, irrespective of the metal material, the abrasion wear of the metal caused by sliding is reduced, and a blackening phenomenon of the hydraulic oil 3 does not occur.

### Example 2

In the present Example, for further checking by a block-on-ring test of a comparison of the wearing properties with respect to the tube material between the carbon-fiber reinforced synthetic resin and the glass-fiber reinforced synthetic resin conventionally used, the exposure state of the fiber in the cross-section of the ring and the 3-D shape of the wear mark were studied.

### [Materials used for test and the like]

Using the materials shown below, a test was conducted using the materials in combination.

With respect to each fiber to be contained in the ring for test, the fiber was added in an amount of 10% by weight, based on the weight of the epoxy resin. As an oil for test, HP46 oil (manufactured by JX) was used.

The properties of the glass fiber and carbon fiber used are shown in Table 5, the combinations of the material for the block and the material for the ring are shown in Table 6, and the appearance of each ring is shown in Fig. 8. The test conditions are shown in Table 7.

**[Table 5]**

| | Specific gravity (g/cm3) | Mohs | Vickers | Epoxy weight ratio |
|---|---|---|---|---|
| Glass fiber | 2.54 | 6.5 | 900 | 2.12 |
| Carbon fiber | 1.8 | 10 | 2,000 | 1.50 |
| Alumina | 3.95 | | | 3.29 |
| Cr2O3 | 5.22 | | | 4.35 |
| Epoxy | 1.2 | - | (M80) | 1 |

**[Table 6]**

| | Block material | Ring material |
|---|---|---|
| ① | EG pipe | Epoxy resin + Glass fiber |
| ② | EG pipe | Epoxy resin + Carbon fiber |
| ③ | Forged pipe | Epoxy resin + Glass fiber |
| ④ | Forged pipe | Epoxy resin + Carbon fiber |

**[Table 7]**

| | | | | | | |
|---|---|---|---|---|---|---|
| Ring material | Oil temperature | Test time | Number of revolutions | Load | | Sliding distance 2.47 km rate |
| Epoxy + Glass fiber | 80°C | 2.3 h | 163 rpm | 5 kg | | |
| Epoxy + Carbon fiber | | | | | | Sliding 0.3 m/sec |

### [Test items]

- Abrasion test method: LFW block-on-ring test
- Comparison of abrasion wear: Examination under a microscope, comparison of 3-D image by a laser displacement method

### [Test results]

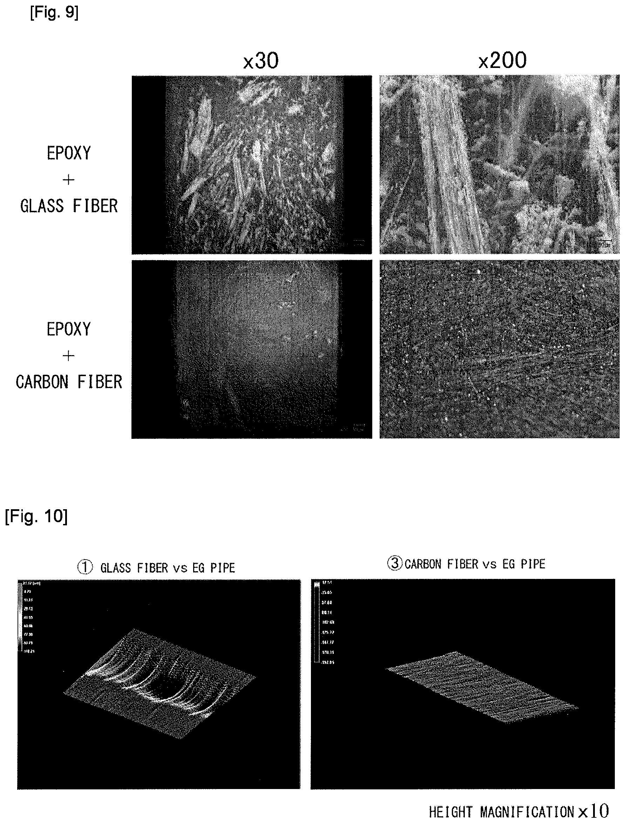

The appearances of the formed glass reinforced epoxy ring and carbon-fiber reinforced epoxy ring are shown in Fig. 8. As can be seen from the photomicrographs (Fig. 9) of the cross-sections of the both formed rings, with respect to the glass fiber, thick short fibers having different diameters are unevenly distributed. On the other hand, with respect to the carbon fiber, thin long fibers are uniformly distributed.

3-D shapes obtained by measuring the sliding surfaces of the blocks using a laser after completion of the present test are shown in Fig. 10. A comparison of the two photographs clearly shows that the glass reinforced epoxy ring causes the EG pipe material to severely wear, and that the carbon-fiber reinforced epoxy ring causes the EG pipe material to only slightly wear.

The observation of the individual wearing surfaces has confirmed that the epoxy material having a glass fiber causes the tube material to markedly wear, whereas the epoxy resin material having a carbon fiber causes the pipe material to relatively slightly wear.

### Example 3

In the wear problem of the cylinder tube in the actual machine, the cause of wear was expected to reside in the hard glass fiber in the resin material used as the backup ring. As a method for solving this problem, for studying a change of the reinforcing material added to the backup ring from a glass fiber to a carbon fiber, a polyamide resin having nylon 66 reinforced with a glass fiber or a carbon fiber was used.

In the test method, a block-on-ring test was conducted in the same manner as in Example 1 with respect to a glass-fiber reinforced nylon 66 resin and a carbon-fiber reinforced nylon 66 resin. As a result, it has been found that, like Example 1, the combination of the carbon-fiber reinforced nylon 66 resin and the EG pipe material is suitable for reducing the abrasion wear.

### [Conclusion]

As described above, the invention is (1) a sealing device having a mechanism in which a metallic member and a resin member relatively slide, characterized in that the metallic member comprises electric-resistance welded carbon steel, and the resin member comprises a carbon-fiber reinforced synthetic resin, and, by using the member comprising electric-resistance welded carbon steel and the member comprising a carbon-fiber reinforced synthetic resin in combination, the invention exhibits an effect such that blackening of hydraulic oil and a phenomenon of increase of the abrasion wear of the electric-resistance welded carbon steel caused due to sliding of the member comprising electric-resistance welded carbon steel and a member comprising a glass-fiber reinforced synthetic resin can be solved, and includes the following (2) to (9) embodiments.
(2) The sealing device according to item (1) above, wherein the electric-resistance welded carbon steel is the electric-resistance welded carbon steel which has not been subjected to hot treatment or cold treatment.
(3) The sealing device according to item (1) or (2) above, wherein the electric-resistance welded carbon steel has a metallographic structure having 20 µm or less ferrite crystals dispersed.
(4) The sealing device according to any one of items (1) to (3) above, wherein the electric-resistance welded carbon steel is the electric-resistance welded carbon steel having a cross-section hardness distribution which exhibits a constant value from the surface to a depth of 50 µm.
(5) The sealing device according to any one of items (1) to (4) above, wherein the electric-resistance welded carbon steel contains elements of C: 0.06 to 0.12%, Si: 0.40% or less, Mn: 0.10 to 15%, P: 0.03% or less, and S: 0.02% or less.
(6) The sealing device according to any one of items (1) to (5) above, wherein the resin member comprises an engineering plastic.
(7) The sealing device according to item (6) above, wherein the engineering plastic is selected from a polyamide resin, an epoxy resin, and a fluororesin.
(8) The sealing device according to any one of items (1) to (7) above, wherein the resin member contains a carbon fiber in an amount of 5 to 15% by weight.
(9) The sealing device according to any one of items (1) to (8) above, wherein the metallic member is a cylinder tube, and the resin member is a backup ring provided in a piston.

### Industrial Applicability

The invention is directed to a sealing device having a mechanism in which a metallic member and a resin member relatively slide, wherein the metallic member comprises electric-resistance welded carbon steel, and the resin member comprises a carbon-fiber reinforced synthetic resin, and the sealing device can reduce wear of the metallic member at the sliding surface, and therefore can be applied to general apparatuses having a sliding mechanism having a metallic member and a fiber reinforced resin member, and thus, in apparatuses having such a sliding mechanism, there is no need to replace or repair a sliding member for a long operation term, and the safety can be ensured.

Particularly, the improvement of the safety and life of an apparatus having a cylinder which needs the sealing device is considered to exhibit remarkable economical effects in a wide variety of industrial fields.

### Reference Signs List

- 1:: Fiber reinforced resin ring
- 2:: Metallic block
- 3:: Hydraulic oil
- 4:: Direction of rotation
- 5:: Load

## Claims

1. A sealing device having a mechanism in which a metallic member and a resin member relatively slide, **characterized in that** the metallic member comprises electric-resistance welded carbon steel, and the resin member comprises a carbon-fiber reinforced synthetic resin.

2. The sealing device according to claim 1, wherein the electric-resistance welded carbon steel is electric-resistance welded carbon steel which has not been subjected to hot treatment or cold treatment.

3. The sealing device according to claim 1 or 2, wherein the electric-resistance welded carbon steel has a metallographic structure having 20 µm or less ferrite crystals dispersed.

4. The sealing device according to claim 1 or 2, wherein the electric-resistance welded carbon steel is the electric-resistance welded carbon steel having a cross-section hardness distribution which exhibits a constant value from the surface to a depth of 50 µm.

5. The sealing device according to claim 1 or 2, wherein the electric-resistance welded carbon steel contains elements of C: 0.06 to 0.12%, Si: 0.40% or less, Mn: 0.10 to 15%, P: 0.03% or less, and S: 0.02% or less.

6. The sealing device according to claim 1 or 2, wherein the resin member comprises an engineering plastic.

7. The sealing device according to claim 6, wherein the engineering plastic is selected from a polyamide resin, an epoxy resin, and a fluororesin.

8. The sealing device according to claim 1 or 2, wherein the resin member contains a carbon fiber in an amount of 5 to 15% by weight.

9. The sealing device according to claim 1 or 2, wherein the metallic member is a cylinder tube, and the resin member is a backup ring provided in a piston.
